# EUROPÄISCHE PATENTSCHRIFT

(11) **EP 4 078 550 B1**
(45) Veröffentlichungstag und Bekanntmachung des Hinweises auf die Patenterteilung: **02.09.2026**
(21) Anmeldenummer: 20816113.3
(22) Anmeldetag: 13.11.2020
(51) Int. Cl.: G08B 17/107

(54) **MESSKAMMER ZUR ANBRINGUNG AUF EINER RAUCHDETEKTIONSEINHEIT MIT EINER LICHTFALLE NACH DEM PRINZIP EINER FRESNEL-STUFENLINSE**
MEASUREMENT CHAMBER FOR MOUNTING ON A SMOKE DETECTION UNIT, HAVING A LIGHT TRAP ACCORDING TO THE PRINCIPLE OF A FRESNEL STEPPED LENS
CHAMBRE DE MESURE À MONTER SUR UNE UNITÉ DE DÉTECTION DE FUMÉE, COMPORTANT UN PIÈGE À LUMIÈRE SELON LE PRINCIPE D'UNE LENTILLE ÉTAGÉE DE FRESNEL

(30) Priorität: 20.12.2019 EP 19218628
(43) Veröffentlichungstag der Anmeldung: 26.10.2022
(73) Patentinhaber: Siemens Schweiz AG, 8047 Zürich (CH)
(72) Erfinder: KUHN-MATYSIAK, Ulrich, 79219 Staufen (DE)
(74) Vertreter: Siemens Patent Attorneys
(86) Internationale Anmeldenummer: PCT/EP2020/082157
(87) Internationale Veröffentlichungsnummer: WO 2021/121815

(56) Entgegenhaltungen:
- EP-A1- 3 182 391
- EP-A1- 3 182 391
- EP-A2- 0 135 361
- EP-A2- 0 135 361
- EP-B1- 0 135 361
- EP-B1- 3 182 391
- DE-T2- 60 201 208
- DE-T2- 60 201 208

## Beschreibung

Die Erfindung betrifft ein Verfahren zur Herstellung einer Messkammer. Weiter betrifft die Erfindung ein Rauchdetektionsmodul mit einer Rauchdetektionseinheit hergestellt nach einem derartigen Herstellungsverfahren. Schliesslich betrifft die Erfindung einen Rauchmelder, insbesondere einen Streulichtrauchmelder.

Der Einsatz derartiger Messkammern in Rauchmeldern ist allgemein bekannt. Sie werden auch als optische Messkammern oder auch als Labyrinth bezeichnet.

Aus der EP 0 135 361 A2 ist ein Lichtabsorber zur Verwendung in einer Messröhre mit empfindlichen optischen Verschmutzungsdetektoren bekannt, wobei der Lichtabsorber eine zentrale lichtaufnehmende konische Fläche umfasst, umgeben von mindestens einer ringförmigen, kegelstumpfförmigen Oberfläche, um mindestens eine ringförmige Rille oder ein Tal zu bilden, die die zentrale Zone umgibt, wobei eine Wand der Rille oder eine Wand des Tals direktes, einfallendes Licht abschirmt.

Aus der DE 602 01 208 T2 (Übersetzung des europäischen Patents EP 1 253 566 B1) ist ein Spritzgussverfahren zur Herstellung der Labyrinthwandung einer Rauchkammer einer Feuerdetektoreinheit eines Streulichtdetektionstyps bekannt.

Aus der EP 3 499 475 A2 und aus der EP 3 319 057 A1 sind Rauchdetektionseinheiten bekannt, die in optoelektronische Bauteile als System-on-a-Chip (SoC) integriert sind.

Die in der EP 3 499 475 A2 als SMD-Bauelement ausgebildete Rauchdetektionseinheit umfasst eine Infrarot-LED, eine blauleuchtende LED sowie eine spektral darauf abgestimmte Photodiode. Die optischen Achsen der LEDs verlaufen im montierten Zustand der Rauchdetektionseinheit quer, d.h. nahezu orthogonal, zur Leiterplatte. Die optische Achse der Photodiode verläuft orthogonal zur Leiterplatte. Zudem ist eine Messkammer zur Applizierung auf einem Schaltungsträger beschrieben, der eine solche integrierte Rauchdetektionseinheit umfasst. Die Messkammer ist durchlässig für zu detektierenden Rauch, jedoch gegenüber direktem Umgebungslicht abgeschirmt.

Hierbei tritt das Problem auf, dass durch die extreme Rückwärtsstreulichtanordnung von ca. 160° ein nicht unerheblicher Teil des von den beiden LEDs in Richtung zur gegenüberliegenden Messkammer ausgesandten Lichts als sogenannter Grundpuls zurück zum Photosensor bzw. zur Photodiode gestreut und/oder reflektiert wird. Weist eine solche Messkammer einen angenommenen Durchmesser von 25 mm bei einer Bauhöhe von 15 mm auf, so überschreitet der empfangene Lichtintensitätspegel des reflektierten Grundpulses den Alarmierungspegel für den Brandfall um ein Vielfaches. Eine zuverlässige Rauchdetektion ist damit überhaupt nicht möglich.

Eine weitere Reduktion des Grundpulses ist z.B. mittels eines aus der US 2009/237259 A1 bekannten Kegels möglich, der an der Messkammerinnenseite ausgebildet ist und den auftreffenden Lichtkegel seitlich ablenkt.

Davon ausgehend ist eine Aufgabe der vorliegenden Erfindung, ein Herstellungsverfahren für eine Messkammer anzugeben, bei welcher der Einfluss des Grundpulses verringert ist.

Schliesslich ist es eine Aufgabe der Erfindung, ein Rauchdetektionsmodul mit einer solchen Messkammer, hergestellt nach dem erfindungsgemässen Verfahren, und einen Rauchmelder mit einem solchen erfindungsgemässen Rauchdetektionsmodul anzugeben.

Diese Aufgaben werden durch die Merkmale des Anspruchs 1 gelöst. Schliesslich wird die Aufgabe durch ein Rauchdetektionsmodul mit einer nach dem erfindungsgemässen Verfahren hergestellten Messkammer und durch einen Rauchmelder mit einem solchen erfindungsgemässen Rauchdetektionsmodul gelöst.

Die kantigen, vorzugsweise scharfkantigen Lichtfallenstrukturen sind derart ausgeformt, dass sie dem bauformreduzierten Prinzip einer Fresnel-Stufenlinse folgen.

Mit anderen Worten sind diese lichtabsorbierenden Strukturen eine bauformreduzierte Form eines einzelnen Lichtfallentrichters analog dem Prinzip einer Fresnel-Stufenlinse. Weiter mit anderen Worten sind die Lichtfallenstrukturen derart ausgeformt, dass sie optisch auf oder in etwa auf einen gemeinsamen Punkt ausgerichtet sind. Bei ordnungsgemässer Anbringung der Messkammer an eine dazu vorgesehene Rauchdetektionseinheit liegt dann dieser Punkt idealerweise am Lichtemitter bzw. am Lichtaustrittspunkt dieser Rauchdetektionseinheit.

Alternativ können die Lichtfallenstrukturen derart ausgeformt sein, dass sie optisch auf oder in etwa auf eine Gerade ausgerichtet sind, die idealerweise durch die Sendeachse direkt am Lichtemitter und vorzugsweise durch die Empfangsachse direkt am Photosensor verläuft. Die Lichtfallenstrukturen können auch als Fresnel-Lichtfallenstrukturen bezeichnet werden. Es handelt sich bei diesen um linienförmige, vorzugsweise um kreisförmige, elliptische oder gerade Lichtfallenstrukturen.

Mit «optischer Ausrichtung» der Fresnel-Lichtfallenstrukturen ist gemeint, dass die Winkelhalbierende des Öffnungswinkels einer jeweiligen Lichtfallenstruktur durch den gemeinsamen Punkt als «Brennpunkt» verläuft bzw. die zuvor genannte Gerade schneidet. Die Winkelhalbierende verläuft dabei senkrecht zur Tangente, die entlang der Längserstreckung der jeweiligen Lichtfallenstruktur entlang an deren Innenkante bzw. entlang an deren Scheitel verläuft.

Der Kern der Erfindung liegt darin, die Bauform eines «idealen» Lichtfallentrichters in eine Vielzahl von verkleinerten Lichtfallentrichterstrukturen analog dem Fresnel-Prinzip zu verkleinern. Durch die Ausrichtung dieser Fresnel-Lichtfallenstrukturen ist vorteilhaft der vom Lichtemitter aus gesehene Rückstreuquerschnitt im Vergleich zu den geraden, regelmässig gezackten lichtabsorbierenden Strukturen reduziert. Der Grundpuls ist erheblich reduziert.

Nach einer nicht erfindungsgemässen Ausführungsform weisen die (Fresnel-)Lichtfallenstrukturen analog einem Brennpunkt einer Fresnel-Stufenlinse eine Fresnel-Achse auf. Sie sind zudem auf einen gemeinsamen Fresnel-Punkt ausgerichtet. Der Fresnel-Punkt liegt in einer der Messkammerdecke gegenüberliegenden Bodenebene der Messkammer oder in einem geringen Abstand dazu hin zur Messkammerdecke, d.h. in einem geringen Abstand von maximal 5 mm, vorzugsweise von maximal 2 mm. Die Bodenebene ist die Ebene, die von einem Rand der Messkammer im Sinne eines «Topfrandes» aufgespannt wird. Die Messkammer ist dabei so ausgestaltet, dass dann dieser Rand nach Anbringung der Messkammer auf oder an der vorgesehenen Rauchdetektionseinheit plan an einem Schaltungsträger der Rauchdetektionseinheit oder an einer flachen Abdeckung auf dem Schaltungsträger plan anliegt. Die Bodenebene verläuft somit parallel zur Ebene des Schaltungsträgers.

Einer weiteren nicht erfindungsgemässen Ausführungsform zufolge sind die Fresnel-Lichtfallenstrukturen derart ausgerichtet, dass sich der Fresnel-Punkt nach Anbringung der Messkammer auf einer vorgesehenen Rauchdetektionseinheit am Lichtaustritt eines Lichtemitters der Rauchdetektionseinheit befindet. Mit anderen Worten ist es nicht zwingend erforderlich, dass die Rotationsachse oder Rotationssymmetrieachse einer typischen Messkammer mit der Fresnel-Achse zusammenfällt.

Alternativ dazu können die Fresnel-Lichtfallenstrukturen derart ausgestaltet bzw. ausgeformt sein, dass sie nach Anbringung der Messkammer auf einer vorgesehenen Rauchdetektionseinheit optisch auf eine Gerade ausgerichtet sind. Die Gerade verläuft zumindest in etwa durch eine optische Sendeachse am Lichtaustrittspunkt eines Lichtemitters der Rauchdetektionseinheit und vorzugsweise zumindest in etwa durch eine Empfangsachse eines Photosensors der Rauchdetektionseinheit. Diese Gerade liegt in einer der Messkammerdecke gegenüberliegenden Bodenebene der Messkammer oder in einem geringen Abstand zur Bodenebene hin zur Messkammerdecke.

Dadurch sind die Fresnel-Lichtfallenstrukturen nicht konzentrisch zur Fresnel-Achse, sondern linienförmig gerade und somit parallel zu dieser Gerade ausgebildet. Im Vergleich zu den bekannten geraden, regelmässigen gezackten lichtabsorbierenden Strukturen weist auch diese Ausbildung der Fresnel-Lichtfallenstrukturen einen deutlich reduzierten Rückstreuquerschnitt auf. Dadurch reduziert sich der Grundpuls deutlich.

Ein weiterer Vorteil liegt darin, dass diese geraden Fresnel-Strukturen einer solchen Messkammerdecke auch Hinterschneidungen, sogenannte «Undercuts», aufweisen können. Derartige Strukturen sind - abgesehen von einem aufwändigen 3D-Kunststoffdruckverfahren - mittels eines herkömmlichen Spritzgussverfahrens mit Stempel und Matrize nicht herstellbar, jedoch mittels eines Strangpressverfahrens. Hierbei wird zunächst ein Strangpressprofil, vorzugsweise aus einem (schwarzen) Kunststoff, mit den geraden linienförmigen Fresnel-Strukturen mittels eines Strangpressverfahrens hergestellt und dann aus diesem Strangpressprofil die Messkammerdecke herausgetrennt, wie z.B. mittels eines Stanzverfahrens. Abschliessend wird die Messkammerdecke zusammen mit einem dazu komplementären, im Wesentlichen hohlen oder hohlzylindrischen Raucheintrittsteil bzw. einem Labyrinthteil zur gesamten Messkammer zusammengefügt.

Insbesondere sind die Fresnel-Lichtfallenstrukturen durch eine Mehrzahl, wie z.B. im Bereich von 10 bis 100, insbesondere in einem Bereich von 25 bis 50, konzentrisch zur Fresnel-Achse angeordneter Kerben oder Rillen oder durch eine (einzige) spiralförmig zur Fresnel-Achse verlaufende Kerbe oder Rille im Sinne einer Schallplatte gebildet.

Vorzugsweise weist die Messkammerdecke eine parallel zur Bodenebene der Messkammer verlaufende Messkammerdeckenebene auf. Die konzentrisch angeordneten Kerben oder Rillen, oder die spiralförmig verlaufende Kerbe oder Rille weisen in der Messkammerdecke eine jeweilige Innenkante sowie eine jeweilige von der Messkammerdecke wegstehende Aussenkante auf. Es ist eine jeweilige Aussenkante in Bezug zu einer radial nach innen angrenzenden Innenkante derart radial nach aussen versetzt, dass eine zwischen beiden Kanten gebildete Flanke orthogonal zur Messkammerdeckenebene verläuft.

Eine «ideale» Fresnel-Lichtfalle weist typischerweise im radialen Aussenbereich Hinterschneidungen auf. Ein Spritzgussverfahren zur Herstellung derartiger Fresnel-Lichtfallenstrukturen scheidet daher - abgesehen von einem aufwändigen 3D-Kunststoffdruckverfahren - fertigungstechnisch aus. Durch das Versetzen der Innenkanten radial nach aussen ist es nun vorteilhaft möglich, mittels eines Spritzgussverfahrens eine konzentrische «Fresnel-Lichtfalle» herzustellen. Diese Lösung ist in optischer Hinsicht zwar nicht so gut wie die vorherigen Lösung mit den Fresnel-Lichtfallenstrukturen mit Hinterschneidungen, aber dennoch erheblich besser als die bekannten geraden, regelmässig gezackten Strukturen.

Nach einer nicht erfindungsgemässen Ausführungsform weist die Messkammer eine orthogonal zur Bodenebene verlaufende Rotationsachse oder Rotationssymmetrieachse auf. Die Fresnel-Lichtfallenstrukturen sind derart ausgerichtet, dass die Fresnel-Achse parallel, vorzugsweise zumindest in etwa fluchtend zur bzw. mit der Rotationsachse oder Rotationssymmetrieachse der Messkammer verläuft. Durch die zentrale Anordnung des Lichtemitters sowie des dazu angrenzenden Photosensors weist die Rauchdetektionseinheit vorteilhaft ein in radialer Richtung zur Fresnel-Achse weitgehend richtungsunabhängiges Ansprechverhalten auf Rauch auf.

Einer weiteren, dazu alternativen nicht erfindungsgemässen Ausführungsform zufolge sind die Fresnel-Lichtfallenstrukturen derart ausgerichtet, dass die Fresnel-Achse mit einer optischen Sendeachse des Lichtemitters der Rauchdetektionseinheit zumindest in etwa fluchtet. Diese Ausführungsform ist vorteilhaft, wenn - wie z.B. bei der eingangs beschriebenen Rauchdetektionseinheit gemäss der EP 3 499 475 A2 - die optische Sendeachse des Lichtemitters nicht orthogonal zum Schaltungsträger, sondern schräg dazu verläuft und somit auch schräg durch die Messkammerdecke der Messkammer verläuft. Durch diese «schielende» Anordnung der konzentrischen Fresnel-Lichtfallenstrukturen um die Fresnel-Achse ist vorteilhaft eine symmetrische Ausrichtung der Fresnel-Lichtfallenstrukturen auf den «schräg» abgestrahlten Lichtkegel des Lichtemitters möglich.

Die Messkammer ist nach einer weiteren nicht erfindungsgemässen Ausführungsform insbesondere zylinderförmig. Die Messkammerdecke folgt dabei einer zylindrischen Grundfläche.

Nach einer weiteren nicht erfindungsgemässen Ausführungsform weist die Messkammer für Rauch durchlässige und für direktes Umgebungslicht abschirmende Lamellen auf. Die Lamellen verlaufen entlang des Umfangs der Messkammer.

Vorzugsweise weist die Messkammer einen Innendurchmesser in einem Bereich von 25 mm bis 80 mm, insbesondere im Bereich von 25 mm bis 50 mm, auf. Sie weist alternativ oder zusätzlich eine Messkammerhöhe in einem Bereich von 10 mm bis 40 mm, insbesondere im Bereich von 15 mm bis 25 mm, auf.

Einer weiteren nicht erfindungsgemässen Ausführungsform zufolge weisen die Fresnel-Lichtfallenstrukturen eine Strukturtiefe in einem Bereich von 1 mm bis 10 mm, insbesondere in einem Bereich von 1.5 mm bis 5 mm und vorzugsweise in einem Bereich von 2 mm bis 3 mm, auf. Mit «Strukturtiefe» sind die axialen Abmessungen der lichtabsorbierenden kantigen, vorzugsweise scharfkantigen Strukturen in Bezug auf die Fresnel-Achse gemeint. Vorzugsweise weist die Messkammerdecke der Messkammer eine einheitliche Messkammerdicke auf, die in einem Bereich von 1 mm bis 3 mm grösser ist als die Strukturtiefe.

Die Aufgabe der vorliegenden Erfindung wird mit einem Verfahren zur Herstellung einer vorzugsweise zylindrischen Messkammer für eine Rauchdetektionseinheit eines Rauchmelders gelöst. Es wird zunächst eine Messkammerdecke erstellt und diese zusammen mit einem dazu komplementären, im Wesentlichen hohlen oder hohlzylindrischen Raucheintrittsteil zur gesamten Messkammer zusammengefügt.

Die Messkammerdecke wird mittels eines Spritzgussverfahrens, insbesondere mittels eines Kunststoffspritzgussverfahrens, als sphärisches Bauteil mit eingebrachten kantigen, vorzugsweise scharfkantigen konzentrischen Lichtfallenstrukturen hergestellt. Die Lichtfallenstrukturen sind derart ausgeformt, dass diese als Fresnel-Lichtfallenstrukturen dem bauformreduzierten Prinzip einer Fresnel-Stufenlinse folgen. Typischerweise sind die Fresnel-Lichtfallenstrukturen dann auf einen entfernt gelegenen Fresnel-Punkt auf einer Fresnel-Achse der Messkammerdecke ausgerichtet. Mit «entfernt gelegen» ist hier gemeint, dass dieser entfernte Fresnel-Punkt mindestens 30 mm von der Messkammerdecke entfernt ist.

Nach Abschluss des Spritzgussverfahrens sind die Fresnel-Lichtfallenstrukturen der sphärischen Messkammerdecke frei von Hinterschneidungen. Die sphärische Messkammerdecke wird anschliessend mittels eines Umformverfahrens in eine im Wesentlichen ebene Messkammerdecke umgeformt. Hierbei werden die Fresnel-Lichtfallenstrukturen in Richtung hin zur Fresnel-Achse geformt. Die Fresnel-Lichtfallenstrukturen bilden nun Hinterschneidungen aus. Typischerweise verschiebt sich hierbei auch der entfernt gelegene Fresnel-Punkt auf der Fresnel-Achse hin zu einem Fresnel-Punkt in einer Bodenebene der Messkammer oder in einem geringen Abstand dazu. Der Fresnel-Punkt befindet sich somit nach Herstellung der gesamten Messkammer und nach Anbringung dieser an einer vorgesehenen Rauchdetektionseinheit zumindest in etwa am Lichtaustritt eines Lichtemitters der Rauchdetektionseinheit. Der Fresnel-Punkt befindet sich nach Anbringung der Messkammer an der vorgesehenen Rauchdetektionseinheit somit in einer Bodenebene der Messkammer oder in einem geringen Abstand dazu. Mit «geringer Abstand» ist ein Abstand von maximal 5 mm, vorzugsweise von maximal 2 mm, gemeint.

Die geometrische Konstruktion der Fresnel-Lichtfallenstrukturen bei einer sphärischen Messkammerdecke kann z.B. mittels eines Finite-Elemente-Verfahrens ermittelt werden, so dass nach dem Umformungsverfahren die ideale Fresnel-Lichtfallenstruktur mit den gewünschten Hinterschneidungen resultiert. Z.B. kann eine Messkammerdecke mit für die vorgesehene Messkammer «idealen» Fresnel-Lichtfallenstrukturen mit Hinterschneidungen so lange auf eine sphärische Fläche mit abnehmendem Radius «transformiert» werden, bis ab einem reduzierten Radius die Messkammerdecke frei von Hinterschneidungen ist.

Nach einer Ausführungsform des erfindungsgemässen Herstellungsverfahrens ist das Umformverfahren ein Blasformverfahren.

Die Aufgabe der Erfindung wird weiterhin mit einem Rauchdetektionsmodul gelöst. Ein solches Rauchdetektionsmodul umfasst eine Rauchdetektionseinheit mit zumindest einem auf einem Schaltungsträger angeordneten Lichtemitter und mit zumindest einem spektral darauf abgestimmten Photosensor jeweils in einer Streulichtanordnung. Der zumindest eine Lichtemitter und der zumindest eine spektral darauf abgestimmte Photosensor liegen der Messkammerdecke der Messkammer direkt gegenüber. Der Streuwinkel zwischen den jeweiligen optischen Sende- und Empfangsachsen des zumindest einen Lichtemitters und des zumindest einen Photosensors der Rauchdetektionseinheit liegt insbesondere im Bereich von 160° bis 185°. Eine derartige Streulichtanordnung wird auch als Rückwärtsstreulichtanordnung bezeichnet.

Der zumindest eine Lichtemitter und der zumindest eine spektral darauf abgestimmte Photosensor können auch eine bereits integrierte optoelektronische Baueinheit sein, d.h. ein sogenanntes System-on-a-Chip (SoC), insbesondere ein als SMD-Bauelement ausgebildetes System-on-a-Chip.

Weiterhin umfasst das Rauchdetektionsmodul eine Messkammer hergestellt nach dem zuvor beschriebenen erfindungsgemässen Herstellungsverfahren. Die Messkammer ist auf bzw. über der Rauchdetektionseinheit angebracht. Die Messkammer umschliesst zusammen mit dem Schaltungsträger, auf dem ein Bodenrand bzw. ein «Topfrand» der Messkammer aufliegt, den zumindest einen Lichtemitter und den zumindest einen Photosensor. Der Schaltungsträger kann auch unter räumlicher Aussparung des zumindest einen Lichtemitters und des zumindest einen Photosensors eine flache Kunststoffabdeckung vorzugsweise mit Blenden für den zumindest einen Lichtemitter und/oder Photosensor aufweisen.

Nach einer Ausführungsform weist die Messkammer eine Rotationsachse oder eine Rotationssymmetrieachse auf, wobei die Messkammer so auf dem Schaltungsträger positioniert ist, dass die Rotationsachse oder die Rotationssymmetrieachse der Messkammer oder die Fresnel-Achse der Fresnel-Lichtfallenstrukturen zumindest in etwa mit einer optischen Sendeachse des Lichtemitters der Rauchdetektionseinheit fluchtet. Durch die zentrale Anordnung des zumindest einen Lichtemitters sowie des dazu angrenzenden zumindest einen Photosensors weist das Rauchdetektionsmodul vorteilhaft ein in radialer Richtung zur Fresnel-Achse weitgehend richtungsunabhängiges Ansprechverhalten auf Rauch auf.

Allgemein ist «mit zumindest in etwa» in Bezug zur Ausrichtung der Fresnel-Achse oder Rotations- bzw. Rotationssymmetrieachse zum Lichtemitter bzw. zum Lichtaustrittspunkt des Lichtemitters eine zulässige Abweichung von wenigen Millimetern, insbesondere von weniger als 5 mm, gemeint.

Wird allgemein Bezug auf die Ausrichtung auf einen Lichtemitter bzw. auf den Lichtaustritt eines Lichtemitters genommen, so ist im Falle von zwei vorhandenen Lichtemittern eine Ausrichtung auf einen der beiden Lichtemitter bzw. auf den Lichtaustrittspunkt einer der beiden Lichtemitter, oder eine Ausrichtung auf einen geometrisch zwischen den beiden Lichtemittern bzw. zwischen den beiden Lichtaustrittspunkten zwischen den zwei Lichtemittern gemeint.

Nach einer besonderen Ausführungsform ist dem zumindest einen Lichtemitter optisch eine Blende zur Begrenzung des jeweiligen emittierten Lichtkegels nachgeschaltet. Es ist dem zumindest einen Photosensor optisch eine weitere Blende zur Begrenzung des jeweiligen optischen Empfangsbereichs vorgeschaltet. Die optischen Begrenzungen sind derart bemessen, dass nur ein Flächenanteil des vom jeweiligen Lichtemitter beleuchteten Teils der Messkammerdecke in einem Bereich von 10% bis 40%, vorzugsweise in einem Bereich von 10 bis 20%, im jeweiligen optischen Erfassungsbereich des zumindest einen Photosensors liegt. Dadurch ist der Einfluss der beleuchteten Fläche auf das Grundsignal vorteilhaft reduziert.

Die Aufgabe wird durch einen Rauchmelder gelöst, insbesondere durch einen Streulichtrauchmelder, der ein Meldergehäuse und ein im Meldergehäuse aufgenommenes erfindungsgemässes Rauchdetektionsmodul aufweist. Das Meldergehäuse weist eine oder mehrere Raucheintrittsöffnungen für den Durchtritt von Umgebungsluft in das Innere des Meldergehäuses und weiter in die Messkammer des Rauchdetektionsmoduls auf.

Schliesslich wird die Aufgabe durch einen weiteren Rauchmelder, insbesondere durch einen Streulichtrauchmelder, gelöst, der ein Meldergehäuse und ein im Meldergehäuse aufgenommenes erfindungsgemässes Rauchdetektionsmodul aufweist. Die Messkammer des Rauchdetektionsmoduls ist dabei integraler Bestandteil des Meldergehäuses. Das Meldergehäuse weist eine oder mehrere als Lamellen ausgebildete, für zu detektierenden Rauch durchlässige und direktes Umgebungslicht abschirmende Raucheintrittsöffnungen auf.

Bei den betrachteten Rauchmeldern bzw. Streulichtrauchmeldern handelt es sich um Rauchgasmelder oder um Rauchwarnmelder. Sie können zusätzlich einen Gassensor zur Detektion brandtypischer Gase und/oder einen Temperatursensor aufweisen. Weiterhin können die betrachteten Rauchmelder über eine gemeinsame Melderleitung oder Melderlinie, insbesondere über eine Zweidrahtleitung, signal- und/oder datentechnisch mit einer Brandmeldezentrale verbunden sein. Sie können alternativ oder zusätzlich eine autonome Energieversorgung, wie z.B. eine Batterie, aufweisen. Weiterhin können derartige Rauchmelder ein Funkmodul zur Übertragung einer Alarmmeldung, einer Warnmeldung oder einer Statusinformation an einen benachbarten Rauchmelder oder an eine Brandmeldezentrale aufweisen.

Die Erfindung sowie vorteilhafte Ausführungen der vorliegenden Erfindung sind am Beispiel der nachfolgenden Figuren ersichtlich. Dabei zeigen
- FIG 1: eine Schnittdarstellung durch ein Rauchdetektionsmodule nach dem Stand der Technik,
- FIG 2: eine Draufsicht auf das Rauchdetektionsmodul gemäss FIG 1,
- FIG 3: das Prinzip der Bauformreduzierung bei einer optischen Fresnel-Stufenlinse,
- FIG 4: die Übertragung des Prinzips gemäss FIG 3 auf einen Lichtfallentrichter,
- FIG 5: einen Schnitt durch eine beispielhafte Messkammer mit bekannten geraden, gleichmässig gezackten lichtabsorbierenden Strukturen und mit erfindungsgemässen Fresnel-Lichtfallenstrukturen in einer gemeinsamen Darstellung,
- FIG 6: eine Ansicht der Messkammerdecke gemäss der in FIG 5 eingezeichneten Blickrichtung VI mit den bekannten geraden gleichmässig gezackten Strukturen und mit konzentrischen Fresnel-Lichtfallenstrukturen mit Hinterschneidungen,
- FIG 7: eine Ansicht der Messkammerdecke gemäss der in FIG 5 eingezeichneten Blickrichtung VII mit den bekannten Strukturen und mit linienförmig geraden Fresnel-Lichtfallenstrukturen mit Hinterschneidungen,
- FIG 8: einen Schnitt durch eine beispielhafte Messkammer mit den konzentrischen Fresnel-Lichtfallenstrukturen mit Hinterschneidungen und mit weitern konzentrischen Fresnel-Lichtfallenstrukturen ohne Hinterschneidungen jeweils gemäss der Erfindung,
- FIG 9: einen Schnitt durch einen Streulichtrauchmelder mit einem Meldergehäuse und mit einem darin aufgenommenen Rauchdetektionsmodul gemäss der Erfindung,
- FIG 10: ein beispielhaftes Spritzgussverfahren als erste Stufe eines Herstellungsverfahrens einer Messkammerdecke für eine Messkammer gemäss der Erfindung,
- FIG 11: ein beispielhaftes Umformverfahren als zweite Stufe des Herstellungsverfahrens der Messkammerdecke für eine Messkammer gemäss der Erfindung, und
- FIG 12: ein beispielhaftes Fügeverfahren als dritte Stufe des Herstellungsverfahrens der gesamten Messkammer gemäss der Erfindung.

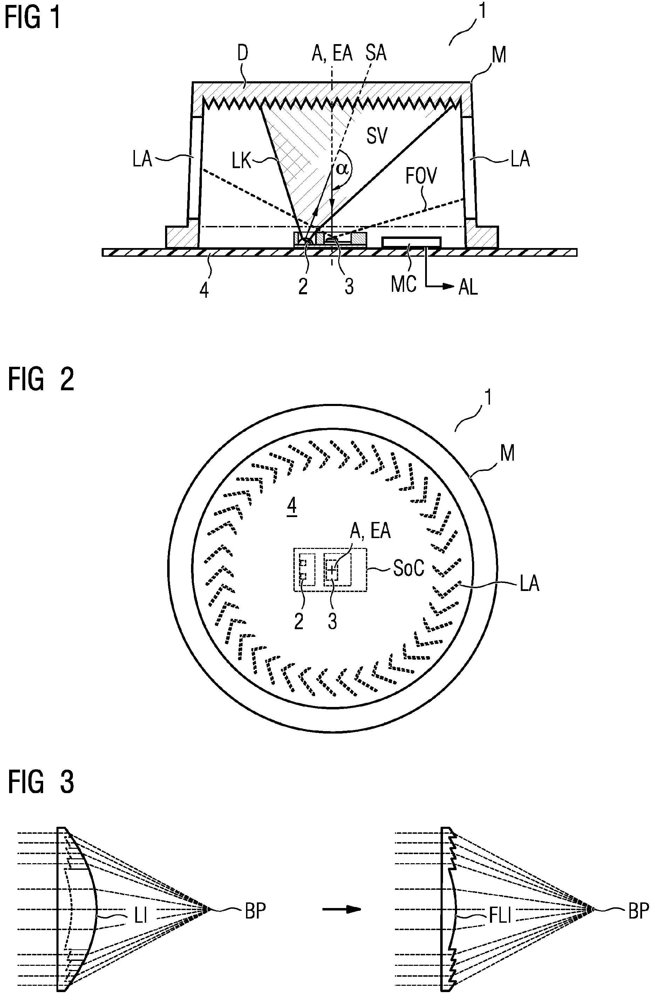

FIG 1 zeigt eine Schnittdarstellung durch ein Rauchdetektionsmodul 1 nach dem Stand der Technik. Mit M ist eine trogförmige oder topfförmige Messkammer bezeichnet, die durch einen Schaltungsträger 4 abgeschlossen wird. Mit LA sind radial zu einer Rotationsachse bzw. Rotationssymmetrieachse A der Messkammer M radial aussenliegende Lamellen bezeichnet, die das Innere der Messkammer M gegenüber direktes Umgebungslicht abschirmen. Auf dem Schaltungsträger 4 ist bereits als integrierte Baueinheit, d.h. als ein sogenanntes System-on-a-Chip (SoC), ein optoelektronisches SMD-Bauelement SoC angeordnet, welches eine Leuchtdiode als Lichtemitter 2 und eine Photodiode als Photosensor 3 umfasst. Mit diesem «Chip» SoC ist ein Mikrocontroller MC verbunden, der dazu eingerichtet, die LED zum Aussenden von Lichtpulsen anzusteuern und ein Sensorsignal vom Photosensor 3 zu empfangen, auszuwerten und ggf. einen Brandalarm AL auszugeben.

Mit LK ist ein von der Leuchtdiode 2 emittierter Lichtkegel und mit SA die zugehörige optische Sendeachse bezeichnet. Mit FOV ist der optische Erfassungsbereich des Photosensors 3 bezeichnet. Im vorliegenden Beispiel fluchtet die optische Empfangsachse des Photosensors 3 mit der Symmetrieachse A der Messkammer M. Die Sendeachse SA ist leicht zur optischen Empfangsachse geneigt, so dass ein grösseres Streulichtvolumen SV als geometrisches Schnittvolumen aus Lichtkegel LK und optischen Erfassungsbereich FOV resultiert. Mit α ist der Streuwinkel zwischen den optischen Sende- und Empfangsachsen SA, A bezeichnet. Er liegt hier bei ca. 160°. Ein solche Streulichtanordnung wird auch als Rückwärtsstreulichtanordnung bezeichnet.

Im Vergleich zu weiteren bekannten Streulichtanordnungen, bei denen die optischen Achsen SA, EA des Lichtemitters 2 und Photosensors 3 parallel zur Ebene des Schaltungsträgers 4 verlaufen, wird hier die Messkammerdecke D sozusagen «voll» ausgeleuchtet. Um das direkt auftreffende Licht vom Lichtemitter 2 möglichst zu unterdrücken, weist die dem Lichtemitter 2 und dem Photosensor 3 direkt gegenüberliegende Innenseite der Messkammerdecke D lichtabsorbierende Strukturen AB in Form kleiner, gezackter Lichtfallen auf. Bei dieser Anordnung wird jedoch nachteilig ein Teil des vom Lichtemitter 2 ausgesandten Lichts zurück zum Photosensor 3 gestreut, dessen Lichtpegel um ein Vielfaches höher ist als der Alarmierungspegel bei Anwesenheit von einer unzulässig hohen Konzentration von Rauch in der Messkammer M. Eine zuverlässige Rauchdetektion ist damit überhaupt nicht möglich.

FIG 2 zeigt eine Draufsicht auf das Rauchdetektionsmodul 1 gemäss FIG 1. In dieser Darstellung sind der Aufbau der integrierten Baueinheit SoC mit der LED 2 und der Photodiode 3 sowie die Lamellen LA zur Abschirmung gegen Umgebungslicht gut erkennbar.

FIG 3 zeigt das an sich bekannte Prinzip der Bauformreduzierung bei einer optischen Fresnel-Stufenlinse FLI. Im linken Teil der FIG 3 ist eine plankonvexe optische Linse LI mit ihrem Brennpunkt BP zu sehen. Die gestufte Bauformreduktion ist gestrichelt eingezeichnet. Im rechten Teil der FIG 3 ist die bauformreduzierte Fresnel-Stufenlinse FLI zu sehen.

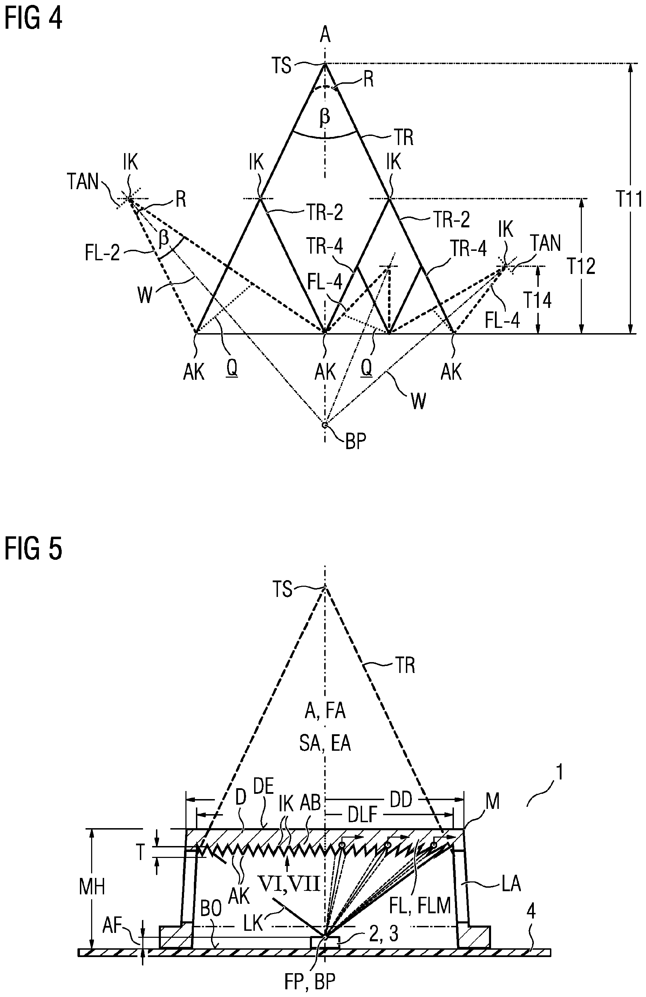

FIG 4 zeigt die Übertragung des Prinzips gemäss FIG 3 auf einen Lichtfallentrichter TR. Gemäss der gezeigten Bildebene würden einfallende Lichtstrahlen von einem Lichtemitter 2, d.h. von unten nach oben oder von unten nach schräg oben, sich hier nach einer Vielzahl von Reflexionen «totlaufen». Mit TS ist eine Trichterspitze bezeichnet, die auf einem der optischen Fresnel-Stufenlinse FLI entsprechenden Brennpunkt BP gerichtet ist. Mit dem Winkel β ist der Öffnungswinkel des Lichtfallentrichters TR bezeichnet. Mit dem Bezugszeichen R ist eine Ausrundung bezeichnet, die der Lichtfallentrichter TR alternativ zur Trichterspitze TS aufweisen kann. Auch eine derartige Form ist als Lichtfalle gut geeignet. Die Ausrichtung des Lichtfallentrichters TR erfolgt beispielhaft entlang der Symmetrieachse A des Lichtfallentrichters TR. Mit T11 ist die Tiefe des Lichtfallentrichters TR bezeichnet. In der nachfolgenden FIG 5 ist gezeigt, wie der Lichtfallentrichter TR zunächst als «ideale» Lichtfalle anstelle der dortigen Messkammerdecke D platziert würde.

Zur Erzielung konzentrischer Fresnel-Lichtfallenstrukturen FS dient als Ausgangspunkt ein Kegel als Lichtfallentrichter TR. Zur Erzielung linienförmiger gerader Fresnel-Lichtfallenstrukturen FS dient ein als Ausgangspunkt ein «Satteldach».

In der FIG 4 ist zu sehen, wie der Lichtfallentrichter TR zunächst in zwei benachbarte, beispielhaft gleiche Teiltrichter TR-2 aufgeteilt wird. Die Strukturtiefe T12 der beiden Teiltrichter TR-2 hat sich dabei halbiert.

Der linke Teil der FIG 4 zeigt, wie nun die Trichterspitze des linken Teiltrichters TR-2 in Bezug auf die Symmetrieachse A radial nach aussen versetzt wird, so dass die Trichterspitze der jetzigen Teil-Fresnel-Lichtfalle LF-2 und somit deren Innenkante IK optisch auf den «Brennpunkt» BP des Lichtfallentrichters TR ausgerichtet ist. Mit Q ist vom «Brennpunkt» aus gesehener Lichtfallenquerschnitt bezeichnet. Mit W ist die Winkelhalbierende zum Öffnungswinkel β der Teil-Fresnel-Lichtfalle LF-2 bezeichnet, die hier zur Veranschaulichung senkrecht auf der mit TAN bezeichneten Tangente steht. Tatsächlich verläuft die Tangente TAN senkrecht zur Blattebene der FIG 4 und liegt an der Innenkante IK der Teil-Fresnel-Lichtfalle LF-2 an.

Der rechte Teil der FIG 4 zeigt eine weitere Halbierung, so dass in Summe vier Teiltrichter TR-4 resultieren. Deren Tiefe T14 beträgt nur noch ein Viertel der Tiefe T11 des ursprünglichen Lichtfallentrichters TR. Es werden nun die Trichterspitze der beiden rechten Teilrichter TR-4 in Bezug auf die Symmetrieachse A radial nach aussen versetzt, so dass die Trichterspitze der jetzigen Teil-Fresnel-Lichtfallen LF-4 und somit deren Innenkante IK wiederum optisch auf den «Brennpunkt» BP des Lichtfallentrichters TR ausgerichtet sind. Im gezeigten Beispiel der FIG 4 erfolgte die Halbierung jeweils gleichmässig und ist lediglich beispielhaft zu betrachten. Es kommt auch eine Drittelung oder irgendeine beliebige Art der Aufteilung des ursprünglichen Lichtfallentrichters TR in Frage. Auch können die jeweiligen Strukturtiefen T12, T14 voneinander abweichen. Entscheidend ist lediglich, dass eine Mehrzahl von beliebigen Teiltrichtern auch mit beliebigen Strukturtiefen nebeneinander angeordnet sind, die optisch auf den «Brennpunkt» ausgerichtet sind. Die gezeigte Anordnung mit der optischen Ausrichtung entlang der jeweiligen Winkelhalbierenden auf den «Brennpunkt» ist dabei als Lichtfalle besonders effektiv.

FIG 5 zeigt einen Schnitt durch eine beispielhafte Messkammer M mit bekannten geraden, gleichmässig gezackten lichtabsorbierenden Strukturen AB und mit Fresnel-Lichtfallenstrukturen FL, FLM in einer gemeinsamen Darstellung. Es ist gezeigt, wie der «ideale», jedoch bauraumgreifende Lichtfallentrichter TR als «ideale» Lichtfalle anstelle der gezeigten Messkammerdecke D platziert würde.

Mit MH ist eine Gesamthöhe der Messkammer M und mit T eine hier beispielhaft gleichbemessene Strukturtiefe der lichtabsorbierenden Strukturen AB sowie der Fresnel-Lichtfallenstrukturen FL, FLM bezeichnet. DD bezeichnet den Durchmesser Messkammerdecke D und DLF den Durchmesser der gezeigten Fresnel-Lichtfallenstrukturen FL, FLM.

Im linken Teil der FIG 5 sind bekannte dreieckig gezackte Lichtfallenstrukturen AB zu sehen. Diese sind, je weiter sie sich radial weg zur Symmetrieachse A befinden, zunehmend weniger auf den Lichtsender 2 gerichtet. Der Rückstreuquerschnitt nimmt dabei nachteilig stetig zu.

Im rechten Teil der FIG 5 ist ausgehend von der dreieckigen Lichtfallenstruktur AB zu sehen, wie die Innenkanten IK der jeweiligen Lichtfallenstrukturen durch das radiale Nachaussenversetzen- symbolisiert durch Richtungspfeile - nun optisch auf einen Fresnel-Punkt FP auf den Lichtemitters 2 ausgerichtet sind. Weiter befindet sich der Fresnel-Punkt FP in einem Abstand AF von der Bodenebene BO am Lichtaustrittspunkt des Lichtemitters 2. Die Bodenebene BO der gezeigten Messkammer M verläuft dabei im Abstand der gesamten Messkammerhöhe MH parallel zu einer Messkammerdeckenebene DE.

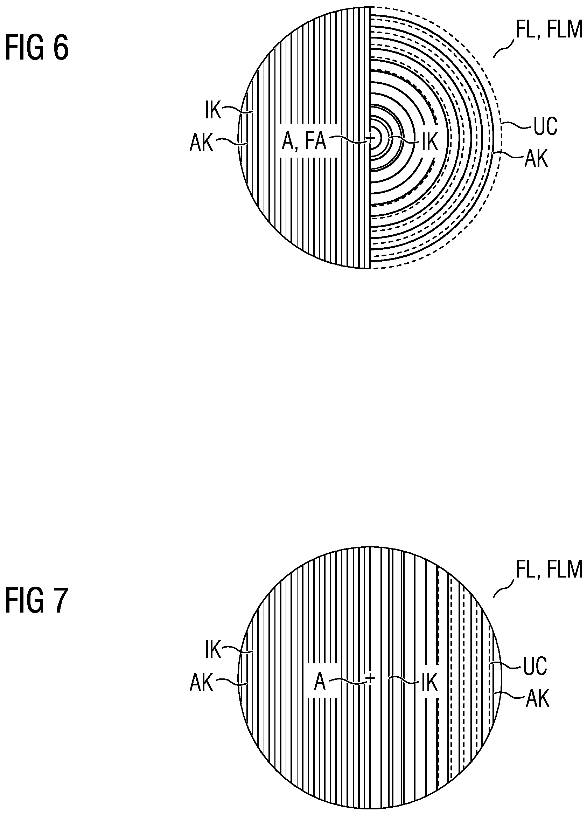

FIG 6 eine Ansicht der Messkammerdecke D gemäss der in FIG 5 eingezeichneten Blickrichtung VI mit den bekannten geraden gleichmässig gezackten Strukturen AB im linken Teil der FIG 6 und in einer Gegenüberstellung mit konzentrischen Fresnel-Lichtfallenstrukturen FLM mit Hinterschneidungen UC im rechten Teil der FIG 6. Die Hinterschneidungen UC selbst sind gestrichelt dargestellt. Diese sind entlang der Blickrichtung VI und somit auch aus der Sicht des Lichtemitters 2 verdeckt und daher nicht sichtbar. Wie eingangs beschrieben, ist eine solche Messkammerdecke D mit derartigen Hinterschneidungen UC mittels eines herkömmlichen Spritzgussverfahrens nicht herstellbar.

FIG 7 zeigt eine Ansicht der Messkammerdecke D gemäss der in FIG 5 eingezeichneten Blickrichtung VII mit den wiederum bekannten Strukturen AB im linken Teil der FIG 7 und mit nun linienförmig geraden Fresnel-Lichtfallenstrukturen FLM mit Hinterschneidungen UC. Eine Messkammerdecke D mit derartigen Fresnel-Lichtfallenstrukturen FLM ist mittels eines Strangpressverfahrens herstellbar.

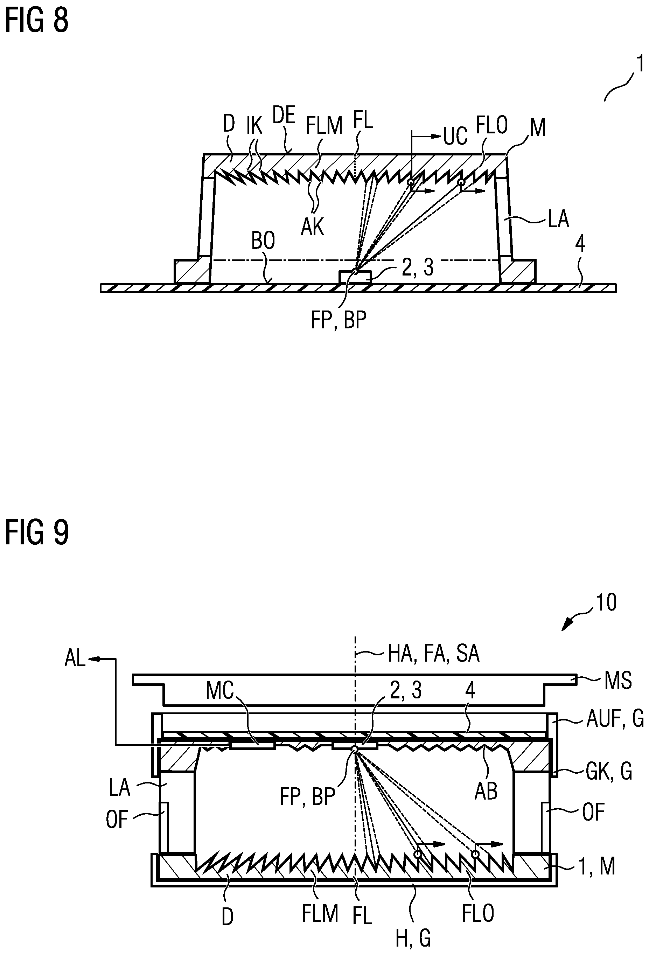

FIG 8 zeigt einen Schnitt durch eine beispielhafte Messkammer M mit den konzentrischen Fresnel-Lichtfallenstrukturen FLM mit Hinterschneidungen UC und mit weiteren konzentrischen Fresnel-Lichtfallenstrukturen FLO ohne Hinterschneidungen jeweils gemäss der Erfindung. In diesem Beispiel ist ersichtlich, wie die Fresnel-Lichtfallenstrukturen FLM mit Hinterschneidungen UC durch radiales Nachaussenversetzen der Aussenkanten AK im linken Teil der FIG 8 nun in Fresnel-Lichtfallenstrukturen FLO ohne Hinterschneidungen im rechten Teil der FIG 8 überführt werden.

FIG 9 zeigt einen Schnitt durch einen als Rauchmelder ausgebildeten Streulichtrauchmelder 10. Der Streulichtrauchmelder 10 umfasst ein Meldergehäuse G und ein im Meldergehäuse G aufgenommenes erfindungsgemässes Rauchdetektionsmodul 1.

Im einem nicht weiter gezeigten Fall kann die erfindungsgemässe Messkammer M als separates Teil innerhalb des Meldergehäuses G auf bzw. über der Rauchdetektionseinheit 1 des Rauchdetektionsmoduls 1 angebracht sein. In diesem Fall gelangt der zu detektierende Rauch durch eine oder mehrere, im Meldergehäuse G vorhandene bzw. ausgebildete Raucheintrittsöffnungen OF und weiter durch die Lamellen LA der Messkammer M zur Rauchdetektionseinheit 1 im Inneren der Messkammer M.

Im gezeigten Fall ist die Messkammer M des Rauchdetektionsmoduls 1 integraler Bestandteil des Meldergehäuses G selbst. Dabei weist das Meldergehäuse G eine oder mehrere als Lamellen LA ausgebildete, für zu detektierenden Rauch durchlässige und direktes Umgebungslicht abschirmende Raucheintrittsöffnungen OF auf. Die gezeigte Messkammer M zeigt zum besseren Verständnis der Erfindung analog der Darstellung in FIG 8 wiederum die konzentrische Fresnel-Lichtfallenstrukturen FLM mit Hinterschneidungen UC und die konzentrischen Fresnel-Lichtfallenstrukturen FLO ohne Hinterschneidungen in einer einzigen Darstellung. Das Meldergehäuse G kann zudem weitere Gehäuseteile aufweisen, wie z.B. eine Melderhaube H oder eine Aufnahme AUF zur zumindest lösbaren Anbringung des Rauchmelders 10 an einem Meldersockel MS. Dabei kann das Meldergehäuse G aus einem Grundkörper GK und der Melderhaube H zusammengesetzt sein. Dazwischenliegend ist dann vorzugsweise die erfindungsgemässe Messkammer M als Teil des Meldergehäuses G angeformt oder ausgeformt. Der der Messkammerdecke D gegenüberliegende Teil des Schaltungsträgers 4 des Rauchdetektionsmoduls 1 bzw. des Rauchmelders 10 selbst kann mit zusätzlichen lichtabsorbierenden Strukturen AB abgedeckt sein.

Mit HA ist eine Hauptachse des vorzugsweise im Wesentlichen symmetrischen bzw. rotationssymmetrisch ausgestalteten Meldergehäuses G bezeichnet. Im Besonderen fluchten diese Hauptachse HA, die Fresnel-Achse FA der Messkammer M sowie vorzugsweise die Sendeachse SA des Lichtemitters 2 der Rauchdetektionseinheit miteinander. Dadurch wird ein weitgehend richtungsunabhängiges Ansprechen des Rauchmelders 10 auf zu detektierenden Rauch erzielt.

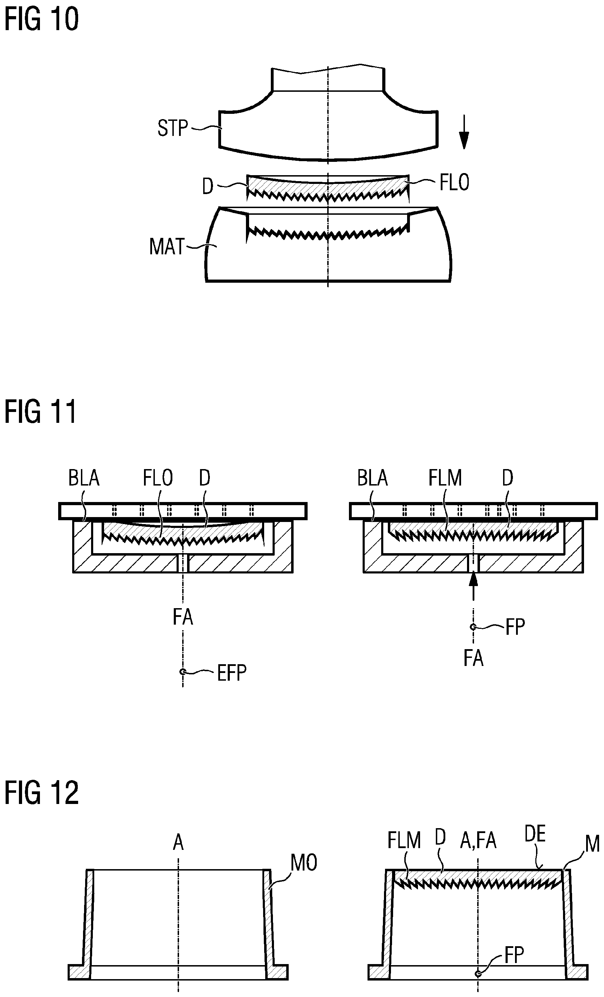

FIG 10 zeigt ein beispielhaftes Spritzgussverfahren als erste Stufe eines Herstellungsverfahrens einer Messkammerdecke D für einer Messkammer M gemäss der Erfindung. Im oberen Teil der FIG 10 ist ein Stempelwerkzeug STP und im unteren Teil eine Matrize MAT zu sehen. Dazwischen ist die nach der ersten Stufe hergestellte sphärische Messkammerdecke D als Zwischenprodukt zu sehen. Letzteres weist wegen des verwendeten linearen Spritzgussverfahrens Fresnel-Lichtfallenstrukturen FLO ohne Hinterschneidungen auf.

FIG 11 zeigt ein beispielhaftes Umformverfahren als zweite Stufe des Herstellungsverfahrens der Messkammerdecke D für eine Messkammer gemäss der Erfindung. Mit BLA ist ein Blaswerkzeug bezeichnet, mittels welchem sich die darin befindliche sphärische Messkammerdecke D z.B. durch Einpressen von Luft von der sphärischen Form in die ebene endgültige Form umgeformt wird. Im Blaswerkzeug BLA sind gestrichelt Entlüftungskanäle dargestellt. Zu sehen ist auch in dieser Darstellung, wie sich ein entfernt gelegener Fresnel-Punkt EFP durch die Umformung entlang der Fresnel-Achse FA in Richtung hin zur Messkammerdecke D versetzt. Die nun ebene Messkammerdecke D weist nun nach dem Umformverfahren Fresnel-Lichtfallenstrukturen FLM mit Hinterschneidungen UC auf.

FIG 12 zeigt beispielhaftes Fügeverfahren als dritte Stufe des Herstellungsverfahrens der gesamten Messkammer M gemäss der Erfindung. Mit MO ist Raucheintrittsteil der Messkammer M bezeichnet, in welches die Messkammerdecke D aus der FIG 11 mittels eines Fügeverfahrens eingesetzt und dann zur gesamten Messkammer M gemäss der Erfindung zusammengesetzt wird. Das Fügen kann z.B. mittels Klebens, Ultraschallschweissens, mittels eines Rastzapfens oder ähnlicher Verfahren erfolgen.

### Bezugszeichenliste

- 1: Rauchdetektionsmodul
- 2: Lichtemitter, Leuchtdiode
- 3: Photosensor, Photodiode
- 4: Schaltungsträger, Leiterplatte
- 10: Brandmelder, Rauchmelder
- α: Streuwinkel
- β: Öffnungswinkel
- A: Symmetrieachse, Rotationssymmetrieachse
- AB: lichtabsorbierende Strukturen, Lichtfallenstrukturen
- AF: Bodenabstand, Abstand des Fresnel-Punktes
- AK: Aussenliegende Kanten der Lichtfallenstruktur
- AL: Brandalarm
- AUF: Aufnahme
- BLA: Streckblaswerkzeug, Blaswerkzeug
- BO: Messkammerboden, Ebene des Messkammerbodens
- BP: Brennpunkt
- D: Messkammerdecke
- DD: Durchmesser der Messkammerdecke
- DE: Messkammerdeckenebene
- DLF: Durchmesser der Fresnel-Lichtfallenstruktur
- EA: optische Empfangsachse
- EFP: entfernter Fresnel-Punkt
- FA: Fresnel-Achse
- FL: Fresnel-Lichtfallenstruktur
- FL-2, FL-4: Teil-Fresnel-Lichtfallen
- FLI: Fresnel-Linse
- FLM: Fresnel-Lichtfalle mit Hinterschneidungen
- FLO: Fresnel-Lichtfalle ohne Hinterschneidungen
- FOV: optischer Erfassungsbereich, Field-of-View
- FP: Fresnel-Punkt
- G: Meldergehäuse
- GK: Grundkörper
- H: Melderhaube
- HA: Hochachse
- IK: Innenliegende Kanten der Lichtfallenstruktur
- LA: Lamellen, Labyrinth
- LI: optische Linse, plan-konvexe Linse
- LK: Lichtkegel, Lichtbündel
- M: Messkammer, Messkammer mit Labyrinth
- MAT: Matrize
- MC: Steuereinheit, Mikrocontroller
- MH: Messkammerhöhe
- MO: Messkammer ohne eingebrachte Messkammerdecke, Raucheintrittsteil, Labyrinthteil
- MS: Meldersockel
- OF: Raucheintrittsöffnung
- Q: Lichtfallenquerschnitt
- R: Rundung, Radius
- SA: optische Sendeachse
- SoC: System-on-a-Chip, integrierte Baueinheit
- STP: Stempelwerkzeug
- SV: Messvolumen, Streuvolumen
- T: Tiefe der Fresnel-Lichtfallenstruktur
- T11: Tiefe des Lichtfallentrichters
- T12, T14: Tiefe eines Teiltrichters
- TAN: Tangente
- TR: Lichtfallentrichter, Trichter
- TR-2, TR-4: Teiltrichter
- TS: Trichterspitze
- UC: Undercut, Hinterschneidung
- W: Winkelhalbierende

## Patentansprüche

1. Verfahren zur Herstellung einer vorzugsweise zylindrischen Messkammer (M) für eine Rauchdetektionseinheit eines Rauchmelders (10), wobei zunächst eine Messkammerdecke (D) erstellt und diese zusammen mit einem dazu komplementären, im Wesentlichen hohlen oder hohlzylindrischen Raucheintrittsteil (MO) zur gesamten Messkammer (M) zusammengefügt wird, wobei die Messkammerdecke (D) mittels eines Spritzgussverfahrens (STP, MAT) als sphärisches Bauteil (FLO) mit eingebrachten kantigen, vorzugsweise scharfkantigen konzentrischen Lichtfallenstrukturen hergestellt wird, welche derart ausgeformt sind, dass diese als Fresnel-Lichtfallenstrukturen (FL) dem bauformreduzierten Prinzip einer Fresnel-Stufenlinse (FLI) folgen, wobei hierbei die Bauform eines idealen Lichtfallentrichters in eine Vielzahl von verkleinerten Lichtfallentrichterstrukturen analog dem Fresnel-Prinzip verkleinert wird, wobei die Fresnel-Lichtfallenstrukturen (FL) der sphärischen Messkammerdecke (FLO) nach dem Spritzgussverfahren (STP, MAT) frei von Hinterschneidungen (UC) sind, und wobei die sphärische Messkammerdecke (FLO) mittels eines Umformverfahrens (BLA), insbesondere mittels eines Blasformverfahrens, in eine im Wesentlichen ebene Messkammerdecke (FLM) umgeformt wird, wobei hierbei die Fresnel-Lichtfallenstrukturen (FL) in Richtung hin zur Fresnel-Achse (FA) geformt werden und nun Hinterschneidungen (UC) ausbilden, wobei sich der Fresnel-Punkt (FP) nach Herstellung der gesamten Messkammer (M) und nach Anbringung dieser an einer vorgesehenen Rauchdetektionseinheit vorzugsweise am Lichtaustritt eines Lichtemitter (2) der Rauchdetektionseinheit befindet.

2. Rauchdetektionsmodul (1), mit einer Rauchdetektionseinheit umfassend zumindest einen auf einem Schaltungsträger (4) angeordneten Lichtemitter (2) und zumindest einen spektral darauf abgestimmten Photosensor (3) jeweils in einer Streulichtanordnung, und mit einer Messkammer (M) hergestellt nach einem Verfahren nach Anspruch 1, wobei die Messkammer (M) auf der Rauchdetektionseinheit angebracht ist.

3. Rauchdetektionsmodul nach Anspruch 2, wobei die Messkammer (M) eine Rotationsachse (A) oder eine Rotationssymmetrieachse (A) aufweist, wobei die Messkammer (M) so auf dem Schaltungsträger (4) positioniert ist, dass die Rotations- oder die Rotationssymmetrieachse (A) der Messkammer (M), oder die Fresnel-Achse (FA) der Fresnel-Lichtfallenstrukturen (FL) zumindest in etwa mit einer optischen Sendeachse (SA) des Lichtemitters (2) der Rauchdetektionseinheit fluchtet.

4. Rauchdetektionsmodul nach Anspruch 2 oder 3, wobei dem zumindest einen Lichtemitter (2) optisch eine Blende zur Begrenzung des jeweiligen emittierten Lichtkegels (LK) nachgeschaltet ist, wobei dem zumindest einen Photosensor (3) optisch eine weitere Blende zur Begrenzung des jeweiligen optischen Empfangsbereichs (FOV) vorgeschaltet ist, und wobei die optischen Begrenzungen derart bemessen sind, dass nur ein Flächenanteil des vom jeweiligen Lichtemitter (2) beleuchteten Teils der Messkammerdecke (D) in einem Bereich von 10% bis 40%, vorzugsweise in einem Bereich von 10 bis 20%, im jeweiligen optischen Erfassungsbereich (FOV) des zumindest einen Photosensors (3) liegt.

5. Rauchmelder, insbesondere Streulichtrauchmelder, mit einem Meldergehäuse (G) und mit einem im Meldergehäuse (G) aufgenommenen Rauchdetektionsmodul (1) nach Anspruch 2, 3 oder 4, wobei das Meldergehäuse (G) eine oder mehrere Raucheintrittsöffnungen (OF) für den Durchtritt von Umgebungsluft in das Innere des Meldergehäuses (G) und weiter in die Messkammer (M) des Rauchdetektionsmoduls (1) aufweist.

6. Rauchmelder, insbesondere Streulichtrauchmelder, mit einem Meldergehäuse (G) und mit einem im Meldergehäuse (G) aufgenommenen Rauchdetektionsmodul (1) nach Anspruch 2, 3 oder 4, wobei die Messkammer (M) des Rauchdetektionsmoduls (1) integraler Bestandteil des Meldergehäuses (G) ist und wobei das Meldergehäuse (G) eine oder mehrere als Lamellen (LA) ausgebildete, für zu detektierenden Rauch durchlässige und direktes Umgebungslicht abschirmende Raucheintrittsöffnungen (OF) aufweist.

## Claims

1. Method for producing a preferably cylindrical measurement chamber (M) for a smoke detection unit of a smoke detector (10), wherein at first a measurement chamber cover (D) is created and this is combined with a complementary, essentially hollow or hollow cylindrical smoke inlet part (MO), to make up the measurement chamber (M) as a whole, wherein the measurement chamber cover (D) is produced by means of an injection moulding process (STP, MAT) as a spherical component (FLO) with introduced angular, preferably sharp-edged concentric light trap structures, which are shaped in such a way that they are Fresnel light trap structures (FL) following the compact-design principle of a Fresnel stepped lens (FLI), wherein in this context the design of an ideal light trap funnel is reduced into a large number of smaller light trap funnel structures analogous to the Fresnel principle, wherein the Fresnel light trap structures (FL) of the spherical measurement chamber cover (FLO), after the injection moulding process (STP, MAT), are free of undercuts (UC), and wherein the spherical measurement chamber cover (FLO) by means of a deformation process (BLA), in particular by means of a blow moulding process, is formed into an essentially flat measurement chamber cover (FLM), wherein the Fresnel light trap structures (FL) are shaped in the direction of the Fresnel axis (A) and form now undercuts (UC), wherein the Fresnel point (FP), after the measurement chamber (M) as a whole has been produced and after it has been attached to a smoke detection unit provided, is preferably located at the light exit of a light emitter (2) of the smoke detection unit.

2. Smoke detection module (1), with a smoke detection unit comprising at least one light emitter (2) arranged on a circuit carrier (4) and at least one spectrally matched photosensor (3) in a scattered light arrangement in each case, and with a measurement chamber (M) produced according to a method according to claim 1, wherein the measurement chamber (M) is attached to the smoke detection unit.

3. Smoke detection module according to claim 2, wherein the measurement chamber (M) has an axis of rotation (A) or a rotational symmetry axis (A), wherein the measurement chamber (M) is positioned on the circuit carrier (4) such that the rotational or rotational symmetry axis (A) of the measurement chamber (M), or the Fresnel axis (FA) of the Fresnel light trap structures (FL) is at least approximately aligned with an optical transmission axis (SA) of the light emitter (2) of the smoke detection unit.

4. Smoke detection module according to claim 2 or 3, wherein a diaphragm to limit the respective emitted light beam (LK) is located optically downstream of the at least one light emitter (2), wherein a further diaphragm to limit the respective optical reception area (FOV) is connected optically upstream of the at least one photosensor (3), and wherein the optical limits are dimensioned in such a way that only a proportion of the area of the part of the measurement chamber cover (D) illuminated by the respective light emitter (2) is in a range of 10% to 40%, preferably in a range of 10 to 20%, in the respective optical detection range (FOV) of the at least one photosensor (3).

5. Smoke detector, in particular a scattered light smoke detector, with a detector housing (G) and with a smoke detection module (1) according to claim 2, 3 or 4 accommodated in the detector housing (G), wherein the detector housing (G) has one or more smoke inlet openings (OF) for the passage of ambient air into the interior of the detector housing (G) and further into the measurement chamber (M) of the smoke detection module (1).

6. Smoke detector, in particular a scattered light smoke detector, with a detector housing (G) and with a smoke detection module (1) according to claim 2, 3 or 4 accommodated in the detector housing (G), wherein the measurement chamber (M) of the smoke detection module (1) is an integral part of the detector housing (G) and wherein the detector housing (G) has one or more smoke inlet openings (OF) embodied as lamellae (LA), permeable to smoke to be detected and shielding from direct ambient light.

## Revendications

1. Procédé pour la fabrication d'une chambre de mesure (M) de préférence cylindrique pour une unité de détection de fumée d'un détecteur de fumée (10), dans lequel un couvercle de chambre de mesure (D) est d'abord élaboré et celui-ci est assemblé avec une partie d'entrée de fumée (MO) sensiblement creuse ou cylindrique creuse, complémentaire de celui-ci, pour constituer la chambre de mesure (M) totale, dans lequel le couvercle de chambre de mesure (D) est fabriqué au moyen d'un procédé de moulage par injection (STP, MAT) sous la forme d'une partie structurale sphérique (FLO) avec des structures de piège à lumière concentriques, anguleuses, de préférence à arêtes vives, introduites, lesquelles sont conformées de telle sorte que celles-ci, en tant que structures de piège à lumière de Fresnel (FL), suivent le principe de conception compacte d'une lentille à échelons de Fresnel (FLI), dans lequel à cet égard la conception d'un entonnoir de piège à lumière idéal est miniaturisée en une pluralité de structures d'entonnoir de piège à lumière miniaturisées de manière analogue au principe de Fresnel, dans lequel les structures de piège à lumière de Fresnel (FL) du couvercle de chambre de mesure sphérique (FLO) sont exemptes de contre-dépouilles (UC) après le procédé de moulage par injection (STP, MAT), et dans lequel le couvercle de chambre de mesure sphérique (FLO) est façonné en un couvercle de chambre de mesure sensiblement plan (FLM) au moyen d'un procédé de formage (BLA), en particulier au moyen d'un procédé de moulage par soufflage, dans lequel à cet égard les structures de piège à lumière de Fresnel (FL) sont façonnées en direction de l'axe de Fresnel (FA) et constituent ainsi des contre-dépouilles (UC), dans lequel la tache de Fresnel (FP) se trouve de préférence au niveau de la sortie de lumière d'un émetteur de lumière (2) de l'unité de détection de fumée après fabrication de la chambre de mesure (M) totale et après installation de celle-ci au niveau d'une unité de détection de fumée prévue.

2. Module de détection de fumée (1), avec une unité de détection de fumée comportant au moins un émetteur de lumière (2) disposé sur un support de circuit (4) et au moins un photocapteur (3) adapté spectralement à celui-ci respectivement dans un agencement à lumière dispersée, et avec une chambre de mesure (M) fabriquée selon un procédé selon la revendication 1, dans lequel la chambre de mesure (M) est installée sur l'unité de détection de fumée.

3. Module de détection de fumée selon la revendication 2, dans lequel la chambre de mesure (M) présente un axe de rotation (A) ou un axe de symétrie de rotation (A), dans lequel la chambre de mesure (M) est positionnée sur le support de circuit (4) de sorte que l'axe de rotation ou de symétrie de rotation (A) de la chambre de mesure (M), ou l'axe de Fresnel (FA) des structures de piège de lumière de Fresnel (FL) est aligné au moins approximativement avec un axe d'émission (SA) optique de l'émetteur de lumière (2) de l'unité de détection de fumée.

4. Module de détection de fumée selon la revendication 2 ou 3, dans lequel un diaphragme pour la limitation du faisceau lumineux (LK) émis respectif est monté optiquement en aval de l'au moins un émetteur de lumière (2), dans lequel un diaphragme supplémentaire pour la limitation de la zone de réception optique (FOV) respective est monté optiquement en amont de l'au moins un photocapteur (3), et dans lequel les limitations optiques sont mesurées de telle sorte que seule une proportion de surface de la partie du couvercle de chambre de mesure (D) éclairée par l'émetteur de lumière (2) respectif comprise dans une plage allant de 10 % à 40 %, de préférence dans une plage allant de 10 à 20 %, se situe dans la zone de détection optique (FOV) respective de l'au moins un photocapteur (3).

5. Détecteur de fumée, en particulier détecteur de fumée à lumière dispersée, avec un boîtier de détecteur (G) et avec un module de détection de fumée (1) selon la revendication 2, 3 ou 4 reçu dans le boîtier de détecteur (G), dans lequel le boîtier de détecteur (G) comprend une ou plusieurs ouvertures d'entrée de fumée (OF) pour le passage d'air ambiant dans l'intérieur du boîtier de détecteur (G) et en outre dans la chambre de mesure (M) du module de détection de fumée (1).

6. Détecteur de fumée, en particulier détecteur de fumée à lumière dispersée, avec un boîtier de détecteur (G) et avec un module de détection de fumée (1) selon la revendication 2, 3 ou 4 reçu dans le boîtier de détecteur (G), dans lequel la chambre de mesure (M) du module de détection de fumée (1) fait partie intégrante du boîtier de détecteur (G) et dans lequel le boîtier de détecteur (G) comprend une ou plusieurs ouvertures d'entrée de fumée (OF) conçues sous forme d'ailettes (LA), perméables à la fumée à détecter et faisant écran à la lumière ambiante directe.
